# EUROPEAN PATENT SPECIFICATION

(11) **EP 4 568 168 B1**
(45) Date of publication and mention of the grant of the patent: **21.10.2026**
(21) Application number: 24211052.6
(22) Date of filing: 06.11.2024
(51) Int. Cl.: H04L 9/06

(54) **SYSTEM AND METHODS FOR PROVIDING SUBSTITUTION BOXES**
SYSTEM UND VERFAHREN ZUR BEREITSTELLUNG VON ERSATZSCHACHTELN
SYSTÈME ET PROCÉDÉS POUR FOURNIR DES BOÎTES DE SUBSTITUTION

(30) Priority: 08.12.2023 US 202318533853
(43) Date of publication of application: 11.06.2025
(73) Proprietor: L3Harris Global Communications, Inc., Rochester, NY 14623 (US)
(72) Inventor: FARRIS, Steven M., Webster, 14580 (US); KURDZIEL, Michael, Rochester, 14624 (US); KAMINSKY, Alan, Rochester, 14618 (US); BAJORSKI, Peter, Fairport, 14450 (US); BURAK, Payton, Jamison, 18929 (US); LUKOWIAK, Marcin, Rochester, 14620 (US); RADZISZOWSKI, Stanislaw, West Henrietta, 14586 (US)
(74) Representative: Schmidt, Steffen J.

(56) References cited:
- NALLA ANANDAKUMAR N ET AL: "A Very Compact FPGA Implementation of LED and PHOTON", 25 October 2014, ADVANCES IN VISUAL COMPUTING : 16TH INTERNATIONAL SYMPOSIUM, ISVC 2021, VIRTUAL EVENT, OCTOBER 4-6, 2021, PROCEEDINGS, PART II; [LECTURE NOTES IN COMPUTER SCIENCE], SPRINGER INTERNATIONAL PUBLISHING, CHAM, PAGE(S) 304 - 321, ISBN: 978-3-030-90436-4, ISSN: 0302-9743, XP047652353
- ROBERTO AVANZI: "A Salad of Block Ciphers", IACR, INTERNATIONAL ASSOCIATION FOR CRYPTOLOGIC RESEARCH, vol. 20161228:141448, 20 December 2016 (2016-12-20), pages 1 - 296, XP061022357
- ANDREY BOGDANOV ET AL: "Generalized Feistel networks revisited", DESIGNS, CODES AND CRYPTOGRAPHY, KLUWER ACADEMIC PUBLISHERS, BO, vol. 66, no. 1 - 3, 3 April 2012 (2012-04-03), pages 75 - 97, XP035160333, ISSN: 1573-7586, DOI: 10.1007/S10623-012-9660-Z

## Description

### BACKGROUND

### Description of the Related Art

Crypto development kits (CDKs) allow users to generate sovereign cipher designs by forming the cipher using a series of predefined building blocks, testing the cipher, and synthesizing a hardware image. The predefined building blocks of conventional CDKs are often not suitable for implementation on field programmable gate arrays (FPGAs).

### SUMMARY

This document concerns systems and methods for providing an S-box. The methods comprise implementing a plurality of layers on a field programmable gate array, wherein each of the layers comprises a substitution sublayer and a mixing sublayer. The substitution sublayer comprises a plurality of µ-boxes that are each configured to perform a different randomly chosen non-linear bijective mapping from GF(2⁴) to GF(2⁴). The mixing sublayer is configured to (i) compute a plurality of product terms each representing a product of an element of a maximum distance separable matrix **M** and an output from one of the plurality of µ-boxes, and (ii) compute a plurality of column vector elements each comprising a sum of respective ones of the plurality of product terms.

The S-box is configured to meet the following requirements: no fixed points where **S(x)** = **x;** and no opposite fixed points where **S(x)** = bitwise complement of **x.** Each of said µ-boxes is configured to meet the following requirements: no fixed points where **µ**(**x**) = **x**; no opposite fixed points where **µ**(**x**) = bitwise complement of **x;** maximum differential probability of 4/16 or smaller; and maximum absolute linear bias of 4/16 or smaller.

In some scenarios, the plurality of layers may comprise four layers. The plurality of µ-boxes may comprise four µ-boxes with a 4-bit input and a 1-bit output. Each µ-box may be implemented via at least four look-up tables of the field programmable gate array. The product terms may be computed by product operators that are each implemented via at least two lookup tables of the field programmable gate array. Each of the product operators may be implemented via four lookup tables of the field programmable gate array.

In those or other scenarios, each element of the maximum distance separable matrix **M,** the output of each of the µ-boxes, and each of the column vector elements comprises an element in a finite field GF(2⁴)/***f***(***x***), wherein ***f***(***x***) is a degree-4 irreducible polynomial. The methods further comprise performing a plurality of rounds of the mixing sublayer using a different randomly chosen maximum distance separable matrix and a different randomly chosen irreducible polynomial.

The present document also concerns an S-box. The S-box comprises a field programmable gate array implementing a plurality of layers that each comprises a substitution sublayer and a mixing sublayer. The substitution sublayer comprising a plurality of µ-boxes that are each configured to perform a different randomly chosen non-linear bijective mapping from GF(2⁴) to GF(2⁴). The mixing sublayer is configured to (i) compute a plurality of product terms each representing a product of an element of a maximum distance separable matrix **M** and an output from one of the plurality of µ-boxes, and (ii) compute a plurality of column vector elements each comprising a sum of respective ones of the plurality of product terms.

The S-box is configured to meet the following requirements: no fixed points where **S(x)** = **x;** and no opposite fixed points where **S(x)** = bitwise complement of **x**. Each of the µ-boxes is configured to meet the following requirements: no fixed points where **µ**(**x**) = **x;** no opposite fixed points where **µ**(**x**) = bitwise complement of **x;** maximum differential probability of 4/16 or smaller; and maximum absolute linear bias of 4/16 or smaller.

In some scenarios, the plurality of layers may comprise four layers. The plurality of µ-boxes may comprise four µ-boxes with a 4-bit input and a 1-bit output. Each µ-box may be implemented via at least four look-up tables of the field programmable gate array.

The product terms may be computed by product operators that are each implemented via at least two lookup tables of the field programmable gate array. Each product operator may be implemented via four lookup tables of the field programmable gate array.

Each element of the maximum distance separable matrix **M,** the output of each of said µ-boxes, and each of said column vector elements may comprise an element in a finite field GF(2⁴)/***f***(***x***), wherein ***f***(***x***) is a degree-4 irreducible polynomial. Each of a plurality of rounds of the mixing sublayer uses a different randomly chosen maximum distance separable matrix and a different randomly chosen irreducible polynomial.

### BRIEF DESCRIPTION OF THE DRAWINGS

This disclosure is facilitated by reference to the following drawing figures, in which like numerals represent like items throughout the figures.
FIG. 1 shows an S-box in accordance with the present solution.
FIG. 2 provides an illustration of a µ-box.
FIG. 3 provides an illustration of a mixing sublayer.
FIG. 4 provides an illustration of a CDK implementing the present solution.
FIG. 5 provides an illustration of a sponge construction employing a unique permutation function.
FIG. 6 provides an illustration of a duplex construction employing a unique permutation function.
FIG. 7 provides an illustration that is useful for understanding the unique permutation function*f*.
FIG. 8 provides an expanded block diagram of the round function shown in FIG. 7.
FIG. 9 provides a flow diagram of an illustrative method for generating encrypted data.
FIG. 10 provides an illustration of a computing device that can be used to build and/or customize cipher designs implementing the present solution.

### DETAILED DESCRIPTION

It will be readily understood that the solution described herein and illustrated in the appended figures could involve a wide variety of different configurations. Thus, the following more detailed description, as represented in the figures, is not intended to limit the scope of the present disclosure but is merely representative of certain implementations in different scenarios. While the various aspects are presented in the drawings, the drawings are not necessarily drawn to scale unless specifically indicated.

The present solution may be embodied in other specific forms without departing from its essential characteristics. The described embodiments are to be considered in all respects only as illustrative and not restrictive. The scope of the present solution is, therefore, indicated by the appended claims rather than by this detailed description. All changes which come within the meaning and range of equivalency of the claims are to be embraced within their scope.

Reference throughout this specification to features, advantages, or similar language does not imply that all the features and advantages that may be realized should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout the specification may, but do not necessarily, refer to the same embodiment.

Reference throughout this specification to "one embodiment", "an embodiment", or similar language means that a particular feature, structure, or characteristic described in connection with the indicated embodiment is included in at least one embodiment of the present solution. Thus, the phrases "in one embodiment", "in an embodiment", and similar language throughout this specification may, but do not necessarily, all refer to the same embodiment.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

CDKs may be used to design systems implementing cryptographic algorithms. Some cryptographic algorithms may be characterized as Product Ciphers and can include, but are not limited to, confusion (or substitution) layers and diffusion layers. Each confusion (or substitution) layer comprises S-boxes implementing non-linear binary mapping functions to map input bits to output bits. Each diffusion layer performs a random permutation to rearrange the bits output from the S-boxes.

Large scale S-boxes are defined as those with input and output spaces that are larger than eight bits. Given that cipher may be targeted for hardware implementation in a field programmable gate array (FPGA), the pre-defined building blocks of the present solution are designed with FPGA characteristics in mind. Implementing large scale S-boxes with FPGAs is challenging. In an FPGA of the present solution, S-boxes are rendered using logic cells. A logic cell consists of one or a few look-up tables (LUTs) as well as flip-flops, multiplexers, and other circuitry. Typical FPGA chips provide LUTs with four inputs, five inputs, or six inputs. Implementation of large-scale S-boxes with these resource constraints requires an innovative approach.

Conventional solutions do not support system objectives for being (1) user specifiable, customizable and/or configurable and (2) synthesizable to an image that is suitable for platform target FPGAs. Such conventional solutions include: an application specific integrated circuit (ASIC) implementation; an inefficient software or hardware implementation requiring either more computational resources or resulting in a negative performance impact; and a hardwired design that cannot accommodate any customization or configuration.

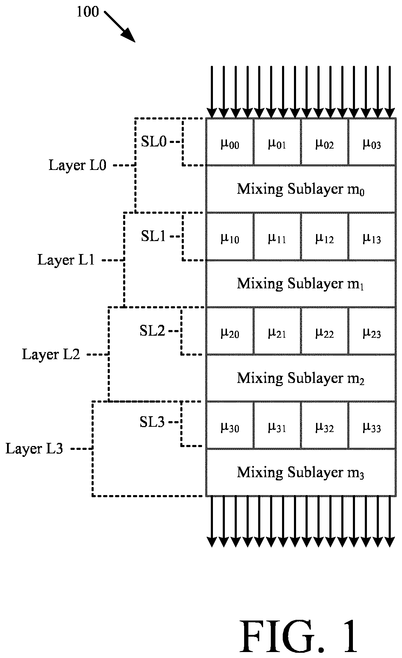

FIG. 1 shows an S-box **100** in accordance with the present solution. S-box **100** is designed for FPGA implementation. An FPGA consists of a large number of logic cells. A logic cell consists of one or a few LUTs as well as flip-flops, multiplexers, and other circuitry. An LUT can be configured to compute any ***n***-input-to-1-output Boolean function, where the number of inputs ***n*** is a characteristic of the particular FPGA chip. Typical FPGA chips provide LUTs with 4, 5, or 6 inputs. S-box **100** is described herein as 16-bit S-box, targeted to FPGA chips with 4-input LUTs. The present solution is not limited in this regard.

The 16-bit S-box **100** uses a "micro-cipher" design. The S-box **100** is not intended to be a stand-alone cipher. Rather, the S-box **100** is intended to be part of the confusion layer or substitution layer in some actual block cipher or other cryptographic algorithm. Thus, the S-box **100** does not have to include features, like a key schedule, that would be found in the outer block cipher. The S-box **100** is designed to meet the following requirements: no fixed points where **S(x)** = **x;** and no opposite fixed points where **S(x)** = bitwise complement of **x.**

The S-box **100** includes four layers **L0**, **L1**, **L2** and **L3**. The present solution is not limited to four layers. Any number of layers can be employed in accordance with a given application. Four layers may be considered a minimal number of layers to provide an efficient S-box process implemented on an FPGA with LUTs with 4-inputs. Each layer consists of a substitution sublayer **SL0**, **SL1**, **SL2**, **SL3** and a mixing sublayer **m₀**, **m₁**, **m₂**, **m₃**. This design enables a large scale S-box to be implemented with multiple layers of small components and is suitable to the resource constraints of FPGA technology. In FIG. 1, the illustrated design comprises a 16-bit large scale S-box. The present solution is not limited to this 16-bit large scale S-box design.

Each substitution layer comprises multiple nonlinear micro substitution boxes, which are referred to herein as µ-boxes. For example, substitution layer **SL0** comprises four µ-boxes µ**₀₀**, **µ₀₁**, **µ₀₂**, **µ₀₃**. Substitution layer **SL1** comprises four µ-boxes **µ₁₀**, **µ₁₁**, **µ₁₂**, **µ₁₃**. Substitution layer **SL2** comprises four µ-boxes **µ₂₀**, **µ₂₁**, **µ₂₂**, **µ₂₃**. Substitution layer **SL3** comprises four µ-boxes **µ₃₀**, **µ₃₁**, **µ₃₂**, **µ₃₃**. Thus, there are a total of sixteen µ-boxes. The present solution is not limited in this regard. Each substitution sublayer **SL0**, **SL1, SL2, SL3** can be any number of µ-boxes wide, i.e., include any number of µ-boxes selected in accordance with a particular application. Four µ-boxes per substitution layer may be considered a minimal number to provide an efficient S-box implementation using current FPGA technology providing LUTs with 4-inputs.

Each µ-box performs a different randomly chosen non-linear bijective mapping from GF(2⁴) to GF (2⁴), subject to the following requirements: no fixed points, where **µ**(**x**) = x; no opposite fixed points, where **µ**(**x**) = bitwise complement of x; maximum differential probability of 4/16 or smaller; and maximum absolute linear bias of 4/16 or smaller.

Each mixing sublayer performs a linear transformation based on a maximum distance separable (MDS) matrix. For example, let **x** = [**x₀**, **x₁**, **x₂**, **x₃**]^{T} be a column consisting of the outputs of the four µ-boxes in the substitution layer. If **M** is a 4x4 MDS matrix, then **y** = [**y₀**, **y₁**, **y₂**, **y₃**]^{T} = **M** · **x** is a column vector containing the outputs of the mixing sublayer. Each element of M, x and y is treated as an element of the finite field GF(2⁴)/***f***(***x***), where ***f***(***x***) is a degree-4 irreducible polynomial and the matrix product is computed using arithmetic in this finite field. A list of the degree-4 irreducible polynomials is provided below. ${x}^{4} + x + 1$ ${x}^{4} + {x}^{3} + 1$ ${x}^{4} + {x}^{3} + {x}^{2} + 1$ Each S-box round may use a different randomly chosen MDS matrix and a different randomly chosen irreducible polynomial.

A 4x4 MDS matrix can be constructed as follows. Let **a₀**, **a₁**, **a₂**, **a₃**, **b₀**, **b₁**, **b₂** and **b₃** be eight distinct non-zero filed elements. If **M** is the Cauchy matrix constructed from the **aᵢ** and **bⱼ** values. That is, **Mᵢⱼ** = (**aᵢ** + **bⱼ**)⁻¹, then **M** is an MDS matrix. The MDS matrix has the property that when one or more of the values are changed in the input vector x, the number of values that change in the output vector y, plus the number of values changed in x, is at least n+1. n is the matrix dimension. In the present case, if one input is changed, then all four outputs change.

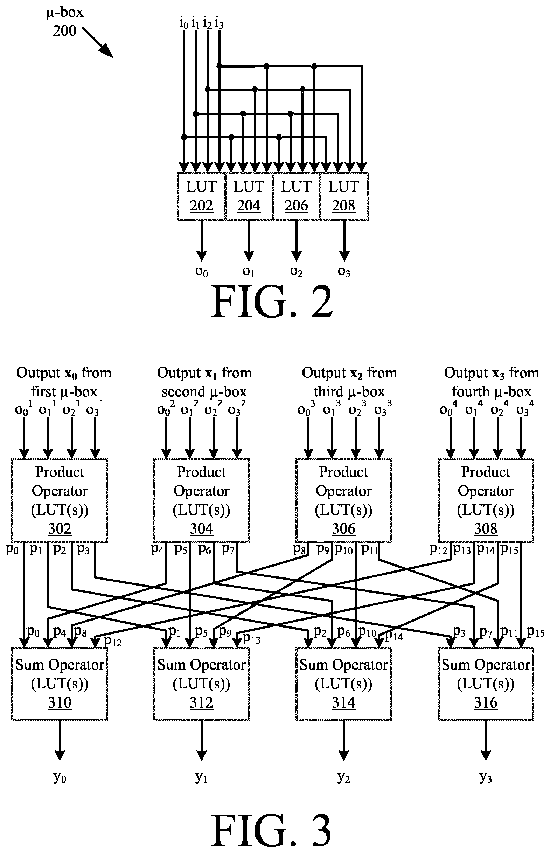

FIG. 2 provides an illustration of a µ-box **200** with an architecture for an FPGA implementation providing LUTs with 4-inputs. Each µ-box **µ₀₀**, **µ₀₁, µ₀₂, µ₀₃, µ₁₀, µ₁₁, µ₁₂, µ₁₃, µ₂₀, µ₂₁**, **µ₂₂, µ₂₃, µ₃₀, µ₃₁, µ₃₂**, **µ₃₃** of FIG. 1 is the same as or similar to µ-box **200.** Thus, the discussion of µ-box **200** is sufficient for understanding the u-boxes of FIG. 1.

The µ-box **200** is implemented in an FPGA with at least four 4-input LUTs **202, 204, 206, 208.** Each LUT uses the four input bits **i₀, i₁, i₂, i₃** to obtain an output bit **o₀, o₁, o₂** or **o₃.** Each LUT comprises an array that replaces a computation with an indexing operation. The input bits **i₀, i₁, i₂, i₃** are used as an index to obtain a data item being looked up. The data item comprises an actual value resulting from the computation.

FIG. 3 provides an illustration of a mixing sublayer **300**. Mixing sublayers **m₀, m₁, m₂, m₃** of FIG. 1 are the same as or similar to mixing sublayer **300**. Thus, the discussion of mixing sublayer **300** is sufficient for understanding the mixing sublayers of FIG. 1.

Mixing sublayer **300** is configured to compute a product **P** of a 4x4-element matrix **M** and a 4-element vector ***x*** using GF(2⁴) arithmetic, yielding a 4-element vector ***y*** (**yₒ**, **y₁, y₂, y₃**). The matrix **M** can be defined, for example, by the following mathematical equation (1). $M = \left[\begin{matrix}{M}_{0} & {M}_{1} & {M}_{2} & {M}_{3} \\ {M}_{4} & {M}_{5} & {M}_{6} & {M}_{7} \\ {M}_{8} & {M}_{9} & {M}_{10} & {M}_{11} \\ {M}_{12} & {M}_{13} & {M}_{14} & {M}_{15}\end{matrix}\right]$ (1) The vector *x* is defined by the following mathematical equation (2). $x = \left[{x}_{0}, {x}_{1}, {x}_{2}, {x}_{3}\right]$ (2) The product **P** is computed by product operators **302, 304, 306, 308** using LUTs of a FPGA. Each product operator uses bits output from a respective µ-box as its input bits to obtain product terms. Specifically, product operator **302** uses bits **o₀¹**, **o₁¹**, **o₂¹**, **o₃¹** output from a first µ-box (e.g., µ-box **µ₀₀**, **µ₁₀**, **µ₂₀** or **µ₃₀**) to define an element **x₀** of vector *x* and obtain product terms **p₀**, **p₁**, **p₂**, **p₃**. Product operator **304** uses bits **o₀²**, **o₁²**, **o₂²**, **o₃²** output from a second µ-box (e.g., µ-box **µ₀₁**, **µ₁₁**, **µ₂₁** or **µ₃₁**) to define an element **x₁** of vector *x* and obtain product terms **p₄**, **p₅**, **p₆**, **p₇**. Product operator **306** uses bits **o₀³**, **o₁³**, **o₂³**, **o₃³** output from a third µ-box (e.g., µ-box **µ₀₂**, **µ₁₂**, **µ₂₂** or **µ₃₂**) to define an element **x₂** of vector *x* and obtain product terms **p₈**, **p₉**, **p₁₀**, **p₁₁**. Product operator **308** uses bits **o₀⁴**, **o₁⁴**, **o₂⁴**, **o₃⁴** output from a fourth µ-box (e.g., µ-box **µ₀₃**, **µ₁₃**, **µ₂₃** or **µ₃₃**) to define an element **x₃** of vector *x* and obtain product terms **p₁₂**, **p₁₃**, **p₁₄**, **p₁₅**. Each product term is a product of an element of matrix **M** and an element of a vector **x.** Accordingly, the product terms can be defined by the following mathematical equations (2)-(17). ${p}_{0} = {M}_{0} ⋅ {x}_{0}$ (2) ${p}_{1} = {M}_{1} ⋅ {x}_{0}$ (3) ${p}_{2} = {M}_{2} ⋅ {x}_{0}$ (4) ${p}_{3} = {M}_{3} ⋅ {x}_{0}$ (5) ${p}_{4} = {M}_{4} ⋅ {x}_{1}$ (6) ${p}_{5} = {M}_{5} ⋅ {x}_{1}$ (7) ${p}_{6} = {M}_{6} ⋅ {x}_{1}$ (8) ${p}_{7} = {M}_{7} ⋅ {x}_{1}$ (9) ${p}_{8} = {M}_{8} ⋅ {x}_{2}$ (10) ${p}_{9} = {M}_{9} ⋅ {x}_{2}$ (11) ${p}_{10} = {M}_{10} ⋅ {x}_{2}$ (12) ${p}_{11} = {M}_{11} ⋅ {x}_{2}$ (13) ${p}_{12} = {M}_{12} ⋅ {x}_{3}$ (14) ${p}_{13} = {M}_{13} ⋅ {x}_{3}$ (15) ${p}_{14} = {M}_{14} ⋅ {x}_{3}$ (16) ${p}_{15} = {M}_{15} ⋅ {x}_{3}$ (17) The elements of matrix **M** are fixed in each round. Therefore, each product term can be computed by a hardwired multiplier implemented by LUTs of a FPGA. In some scenarios, each product term is computed by a multiplier implemented by at least two LUTs of an FPGA. In other scenarios, each product term is computed by a multiplier implemented by at least four LUTs of an FPGA. The present solution is not limited in this regard.

A first bit output from each of the product operators (i.e., bits **p₀**, **p₄**, **p₈**, **p₁₂) is** provided to a sum operator **310.** A second bit output from each of the product operators (i.e., bits **p₁, p₅, p₉, p₁₃**) is provided to a sum operator **312.** A third bit output from each of the product operators (i.e., bits **p₂, p₆, p₁₀, p₁₄**) is provided to a sum operator **314.** A fourth bit output from each of the product operators (i.e., bits **p₃**, **p₇**, **p₁₁**, **p₁₅**) is provided to a sum operator **316.** Each sum operator **310, 312, 314, 316** uses the respective four bits to obtain a sum **y₀**, **y₁**, **y₂** or **y₃** thereof which represents an element of vector y. The sums can be defined by the following mathematical equations (18)-(21). ${y}_{o} = {p}_{0} + {p}_{4} + {p}_{8} + {p}_{12}$ (18) ${y}_{1} = {p}_{1} + {p}_{5} + {p}_{9} + {p}_{13}$ (19) ${y}_{2} = {p}_{2} + {p}_{6} + {p}_{10} + {p}_{14}$ (20) ${y}_{3} = {p}_{3} + {p}_{7} + {p}_{11} + {p}_{15}$ (21) Each sum can be obtained using an LUT that adds the corresponding bits of the respective four product terms.

As evident from the above discussion, a 16-bit large scale S-box has the following area requirements: a substitution layer sublayer with 16 LUTs (4 µ-boxes times 4 LUTs per µ-box); a mixing sublayer with 80 LUTs (4 output elements times 20 LUTs per output element); one layer with 96 LUTs; and the while four-layer S-box with 394 LUTs. It should be emphasized that the 16-bit S-box's FPGA implementation requires the same number of LUTs, no matter which µ-box mappings or MDS matrices are chosen. This makes the 16-bit S-box design eminently suitable for applications requiring customizable S-boxes.

The above described S-box **100** can be used in various systems. Illustrative systems in which the S-box **100** can be used will now be discussed. These systems allow a user to generate sovereign cipher designs by forming the cipher using a series of pre-defined building blocks, testing the cipher and then synthesizing a hardware image for installation in an FPGA of a given platform. The building blocks for the cipher design include the large scale S-box **100** which implements non-linear binary mapping functions. The large scale S-box **100** can be implemented via an FPGA using LUTs that typically support much smaller input/output (I/O) than would otherwise be required for these design implementation. Typical FPGA chips provide LUTs with four inputs, five inputs or six inputs while modern large scale S-box designs require sixteen or more inputs. The present solution provides an innovative solution to this problem by providing a unique method for the design of a strong large scale S-box that can be implemented using the resources available with a typical FPGA.

A successful differential attack mounted on an S-box based cipher - an attack that takes less work than a brute force key search, which requires 2**^{k}** work, where **k** is the key size - depends on the S-box's maximum differential probability. The larger this probability, the less work the attack requires. To analyze the 16-bit S-box's resistance to differential attacks, a computer program generated 100 random 16-bit S-boxes with three layers, and likewise for four, five, six, seven, and eight layers. Another computer program computed each S-box's maximum differential probability. (The program executed about 216×216 loop iterations per S-box.). The following **TABLE 1** lists the results.

**TABLE 1**

| Differential attack resistance | | | | | | |
|---|---|---|---|---|---|---|
| | Number of occurrences for N-layer S-boxes | | | | | |
| Max differential probability | N=3 | N=4 | N=5 | N=6 | N=7 | N=8 |
| 18/65536 | 45 | 46 | 58 | 48 | 47 | 49 |
| 20/65536 | 45 | 52 | 40 | 48 | 50 | 49 |
| 22/65536 | 7 | 2 | 2 | 4 | 3 | 2 |
| 24/65536 | 1 | - | - | - | - | - |
| 32/65536 | 2 | - | - | - | - | - |

With three layers, some S-boxes had maximum differential probabilities as high as 32/65536. With four layers, no S-boxes had maximum differential probabilities higher than 22/65536, an improvement over three layers. Adding more layers did not necessarily yield any further improvement. Therefore, a 16-bit S-box was designed with four layers, and its worst case maximum differential probability is taken to be 22/65536, or 2-11.54.

A successful linear attack mounted on an S-box based cipher depends on the S-box's maximum absolute linear bias. The larger this bias, the less work the attack requires. To analyze the 16-bit S-box's resistance to linear attacks, a computer program computed each four- through eight-layer S-box's maximum absolute linear bias based on a random sample of 100 million, or about 2.3 percent, of the over 4 billion possible linear approximations. (The program executes 108×216 loop iterations per S-box.). The following **TABLE 2** lists the results.

**TABLE 2**

| Linear attack resistance | | |
|---|---|---|
| | Maximum Absolute Linear Bias among 100 S-boxes | |
| S-box Layers | Smallest | Largest |
| 4 | 712/65536 | 840/65536 |
| 5 | 702/65536 | 838/65536 |
| 6 | 694/65536 | 890/65536 |
| 7 | 696/65536 | 850/65536 |
| 8 | 696/65536 | 818/65536 |

Among the 100 four-layer S-boxes, the maximum absolute linear bias ranged from 712/ 65536 to 840/65536. Adding more layers eventually yielded a slight reduction in the maximum absolute linear bias - but not enough to justify the additional cost in FPGA area. Therefore, the 16-bit S-box is designed with four layers.

Because the preceding computer program evaluated only a small sample of the possible linear approximations, another computer program computed the exact maximum absolute linear bias, based on all linear approximations, for the 100 four-layer S-boxes. (The program executes about 232×216 loop iterations per S-box.). These S-boxes' exact biases ranged from 784/65536 to 932/65536. Therefore, the 16-bit S-box's worst case maximum absolute linear bias is taken to be 932/65536, or 2-6.14.

Number of cipher rounds. Consider a complete cipher with a k-bit key and some number of rounds, each round built from the 16-bit S-boxes. To resist a differential attack in which at least **n** S-boxes are active, (1/2-11.54)**n** is greater than **2k.** To resist a linear attack in which at least **n** S-boxes are active, ((1/2-6.14)2)**n** is greater than 2**k** [3]. Therefore, for a 128-bit key, the complete cipher needs **n** = 12 to resist a differential attack and **n** = 11 to resist a linear attack. For a 256-bit key, the complete cipher needs **n** = 23 and **n** = 21, respectively.

Suppose, for example, a complete cipher is designed such that in every two successive rounds, at least five S-boxes are active . Then for a 128-bit key, the cipher should have at least six rounds; for a 256-bit key, at least ten rounds. The cipher should also have some number of additional rounds to provide a security margin.

This attack resistance analysis is based on a sample of 100 S-boxes. When designing a cipher using specifically chosen S-boxes, their actual maximum differential probabilities and maximum absolute linear biases can be computed and used to determine the number of cipher rounds.

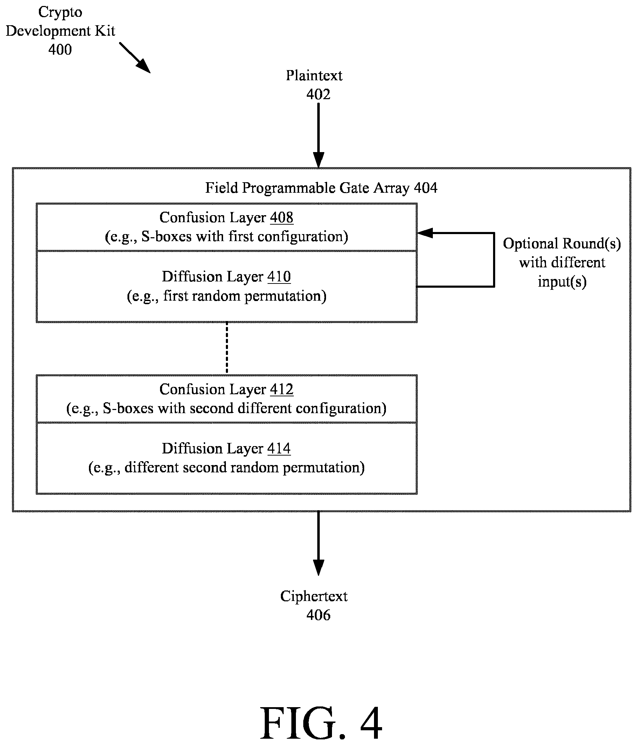

The S-box described above can be used in a Crypto Development Kit that aims to provide a collection of tools and libraries that can be used to build FPGA-based circuit implementing cryptographic algorithms for specific applications. An illustrative crypto development kit **400** is shown in FIG. 4. The circuit designed using the crypto development kit **400** is implemented via an FPGA **404.** The FPGA **404** is generally configured to receive plaintext **402** as an input, process the plaintext **402** to generate ciphertext **406,** and output the ciphertext **406.** Two or more sets of layers are implemented by the FPGA. Each set includes a confusion layer and a diffusion layer. For example, a first set includes confusion layer **408** and a diffusion layer **410.** A second set includes confusion layer **412** and a diffusion layer **414.** The present solution is not limited in this regard. One or more sets of layers may optionally be designed to perform multiple rounds with different inputs, as shown in FIG. 4.

Each confusion layer **408, 412** includes S-boxes. The S-boxes can be the same as or similar to S-box **100** discussed above. The S-boxes of the first confusion **408** layer have a first configuration, while the S-boxes of the second confusion layer **412** have a second different configuration. The diffusion layers **410, 414** implement different random permutations.

The S-boxes of the present solution can also be used with systems for providing cryptographic systems with a self-synchronizing mode of operation. These cryptographic systems may implement block cipher based cryptographic algorithms. The self-synchronizing mode of operation enables automatic cryptographic resynchronization between transmitters and receivers, and also enables late network entry by communication devices into an already established conversation. The self-synchronizing mode of operation provides a way for a receiver to synchronize its local cryptographic algorithm when joining a conversation for which the synchronization information and initialization variable for the cryptographic algorithm has already been sent to participants. Based on pseudo-random events, the communication devices of a participant self-synchronize their cryptographic algorithms during the conversation. The pseudo-random events are based on the ciphertext being transmitted because the ciphertext appears statistically random. Every node on the network has access to the ciphertext, and is configured to detect patterns in the ciphertext. When a pattern is detected, a node will re-initialize a state of its cryptographic algorithm using the ciphertext transmitted over the channel. The channel may include, but is not limited to, a low bit error rate channel. In this way, the nodes will access uncorrupted ciphertext and concurrently synchronize states of their cryptographic algorithms.

The block cipher cryptographic algorithms can include, but are not limited to, adaptations of sponge based cryptographic algorithms. Sponge constructions will be described herein to assist the reader with understanding the present solution. A duplex construction will be described herein to assist the reader in understanding an illustrative adaptation of sponge construction. Sponge and duplex constructions provide frameworks representing new cryptographic paradigms with many advantages including processing performance and provable computational cryptographic strength. A novel cryptographic algorithm design is described herein that is based on the sponge and duplex construction frameworks. More particularly, the novel cryptographic algorithm comprises a unique permutation function ***f*** that is used with a sponge construction and/or a duplex construction. In this regard, the present solution provides the same advantages of conventional sponge and duplex constructions, as well as other additional advantages. These other additional advantages include, but are not limited to: the provision of a highly configurable and customizable cryptographic algorithm; the provision of a symmetric key algorithm that is designed against a military threat model; the provision of increased throughput suitable to support high-rate networked waveforms; and the provision of an algorithm that can be used with key lengths that are longer than the key lengths which can be used with conventional cryptographic algorithms. Longer key lengths result in a higher level of security.

For military applications, the customers desire sovereign cryptography. Sovereign cryptography provides a feature called security autonomy where the customers have their own variant of a cryptographic algorithm. One way to obtain security autonomy is for the customers to specify their own cryptographic algorithm to be implemented in the device(s). This solution is not economically feasible. As such, the present solution provides a proprietary cryptographic algorithm that can be customized in various ways. The customization capability mainly lies in two types of customization, namely factory customization and field customization.

Factory customization is more substantial in terms of changing the cryptographic algorithms' structure and adding new algorithm blocks, but also requires one to have the requisite expertise. One disadvantage of factory customization is that human error can cause degradation of the cryptographic system. This disadvantage is addressed by the present solution. In this regard, the present solution employs a cryptographic (e.g., encryption and/or decryption) algorithm that can be customized without any degradation to the security thereof. Another disadvantage is that some customers do not want others (i.e., the people with the requisite expertise) to have knowledge of their own variant of a cryptographic algorithm. The present solution also addressing this disadvantage by providing a cryptographic algorithm that can be customized in the field.

Field customization allows customers to make changes to the cryptographic algorithm via a tool after the device is provided to them. All possible information that can be input into the system via the tool to provide the field customization are equally valid in terms of not degrading the cryptographic strength of the cryptographic algorithm.

Accordingly, the present solution has two levels of customization. A first Custom Crypto (CC) capability allows customized versions of the sponge based cryptographic algorithm to be embedded in a device (e.g., a handheld radio) at the factory. There are a number of CC settings that are specified for a custom version of the sponge based cryptographic algorithm, after an analysis to ensure that it is secure. The CC settings are stored and loaded into the encryption/decryption circuitry at power-on. The CC capability can be implemented in a substitution layer, a permutation layer and/or a round constant addition layer of a permutation function ***f***, as discussed below.

A second Custom Algorithm Modification (CAM) capability allows a user to customize the encryption/decryption algorithm in the field after power-on (i.e., after the device employing the cryptographic algorithm has been provided to the customer). CAM settings are stored in an N-bit (e.g., 128 bit) register that can be changed at any time (except during encryption/decryption). All possible CAM register values must yield different, fully secure customized algorithms. CAM is implemented in a mixer layer of the permutation function*f*. The CC and CAM capabilities will be described in detail below.

The present solution also has the following additional advantages: increased processing performance and provable computational cryptographic strength; cost effective alternative to embedded sovereign cryptography; includes cryptographic constructs and key lengths to provide post quantum security in a reasonable hardware and software footprint; and designed against a military threat model.

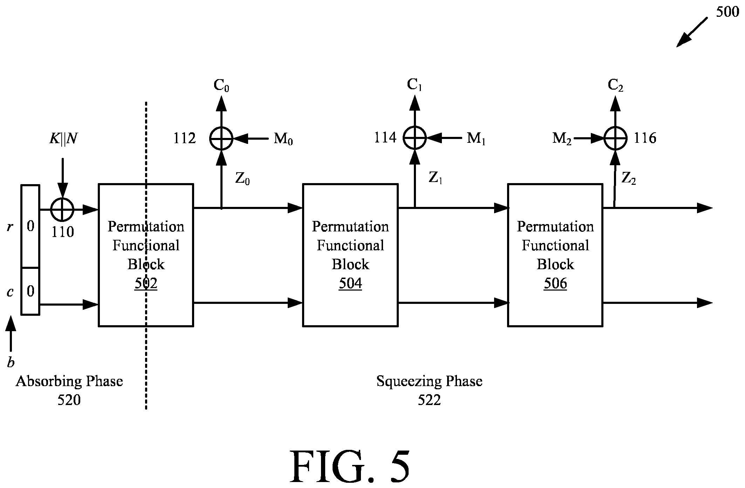

Referring now to FIG. 5, there is provided a schematic illustration of an illustrative architecture for a sponge construction **500** implementing the present solution. Notably, the sponge construction **500** uses a unique permutation function ***f*** (described below) to provide the traditional suite of cryptographic modes. This will become more evident as the discussion progresses.

As shown in FIG. 1, the sponge construction **500** is generally designed to implement symmetric cryptography functionalities, namely key derivation and message encryption/decryption. The sponge construction **500** is a simple iterated construction for building a function ***F*** based on a unique permutation function *f*. The function ***F*** has a variable-length input and an arbitrary output length. The unique permutation function ***f*** operates on a state of ***b** = **r** + **c*** bits, where ***r*** (e.g., 128 bits) is the bitrate and c (e.g., 384 bits) is the capacity. The capacity c determines the security level of the sponge construction.

Notably, the sponge construction **500** can be implemented in hardware, software or a combination of both hardware and software. As such, the operations of each functional block **502-506** may be implemented using hardware and/or software. The hardware can include, but is not limited to an electronic circuit. The electronic circuit can include passive components, active components and logical components.

The sponge construction **500** is divided into two phases. The first phase is an absorbing phase **520** in which the cryptographic key ***K*** or ***K***∥***N*** (i.e., a concatenation of the cryptographic key ***K*** and a flag ***N*)** is absorbed into a state of the sponge construction **500** while interleaving with applications of the underlying permutation function ***f***. Such absorption is achieved by combining ***K*** (or ***K***∥***N***) with the first *r* bits of the initialized state bits ***b.*** In some scenarios, the bits ***b*** (e.g., 512 bits) are initialized to zero. The present solution is not limited in this regard. The bits ***b*** (e.g., 512 bits) may alternatively be initialized to any bit value (e.g., any 512 bit value). As such, each user could generate their own unique value to set during the initialization phase.

The combining of ***K*** (or ***K***∥***N***) with the first ***r*** bits of the initialized state can be achieved via exclusive OR (XOR) operations **510,** as shown in FIG. 5. XOR operations are well known in the art, and therefore will not be described in detail here. Still, it should be understood that the XOR operations are performed on a bit-by-bit basis. The result of each XOR operation is true whenever an odd number of inputs are true and false whenever an even number of inputs are true. The results of the XOR operations are then passed to permutation functional block **502** where the results are interleaved with applications of the unique permutation function***f*.**

The second phase is a squeezing phase **522** in which keystream blocks **Z₀**, **Z₁**, **Z₂** are produced by the performance of the unique permutation function ***f*** in permutation functional blocks **502-506.** Each keystream block **Z₀**, **Z₁**, **Z₂** comprises ***r*** bits. The unique permutation function ***f*** will be described in detail below. Still, it should be understood that the permutation function ***f*** maps each possible value of the bits input thereto into a particular unique value of the output bits. Notably, permutation functional block **502** takes the output of the absorbing phase **520** as an input. Permutation functional block **504** takes the output of permutation functional block **502** as an input. Permutation functional block **506** takes the output of permutation functional block **504** as an input.

Next, the keystream blocks **Z₀**, **Z₁**, **Z₂** are used to encrypt a message **M.** In this regard, the keystream blocks **Z₀**, **Z₁**, **Z₂** can be truncated to a desired length ***l***. Additionally or alternatively, the message **M** may be padded to make it a multiple of *r* (if it is not a multiple of ***r).*** The message **M** is parsed into a plurality of message blocks **M₀**, **M₁**, **M₂**. Each message block **M₀**, **M₁**, **M₂** comprises a plurality of bits of the message **M.** Each keystream block is then combined with a respective message block so as to produce an encrypted data block. The encrypted data block can include, but is not limited to, a ciphertext block **C₀**, **C₁** or **C₂**. The present solution is described herein in relation to ciphertext. The present solution is not limited in this regard. The present solution can be used to encrypt any type of data (e.g., text, audio, video, etc...).

In some scenarios, the combining of the keystream and message blocks is achieved using modular arithmetic. For example, each keystream block **Z₀**, **Z₁**, **Z₂** is combined with a respective block of message bits **M₀**, **M₁**, **M₂** via modulo 2 addition. The modulo 2 addition can be implemented using an XOR operation, as shown in FIG. 5. The XOR operation is performed on a bit-by-bit basis. As such, a first bit **m₀** of a message block **M₀**, **M₁** or **M₂** is combined with a first bit **z₀** of a respective keystream block **Z₀**, **Z₁** or **Z₂** via modulo 2 addition. Next, a second bit **m₁** of a message block **M₀, M₁** or **M₂** is combined with a first bit **z₁** of a respective keystream block **Z₀**, **Z₁** or **Z₂** via modulo 2 addition, and so on.

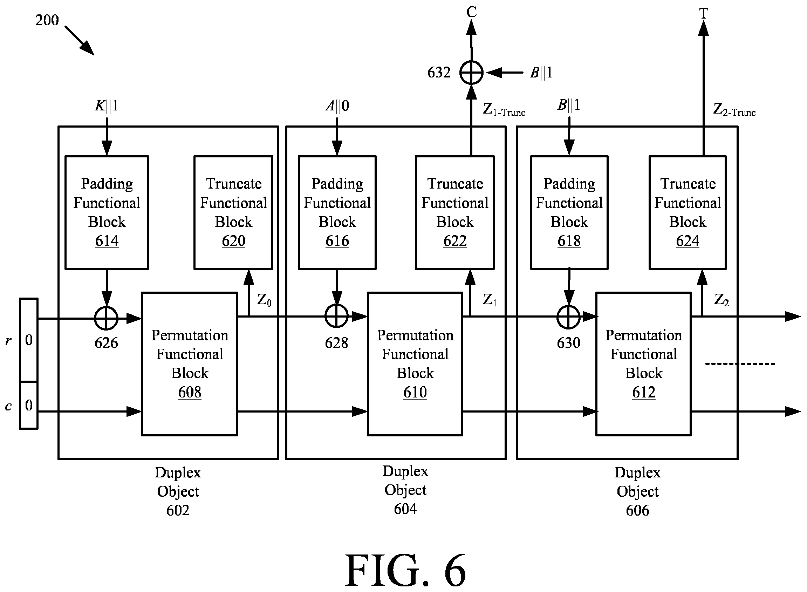

Referring now to FIG. 6, there is provided a schematic illustration of an illustrative architecture for a duplex construction **600** implementing the present solution. The duplex construction **600** is an adaptation of the sponge construction framework that, together with the unique permutation function ***f*** (described below), provides an additional Authenticated Encryption (AE) cryptographic mode. This mode allows both source and integrity verification of encrypted traffic. This will become more evident as the discussion progresses.

Notably, the duplex construction **600** can be implemented in hardware, software or a combination of both hardware and software. As such, the operations of each component **602-632** may be implemented using hardware and/or software. The hardware can include, but is not limited to an electronic circuit. The electronic circuit can include passive components, active components and logical components.

In the duplex construction **600,** the absorbing phase and squeezing phase are combined into each of a plurality of duplex operations. Accordingly, the duplex construction 600 comprises a plurality of duplex objects **602-606.** The operations of each duplex object will be described separately below. Notably, the state of each duplex object call is preserved.

The input to duplex object **602** is a cryptographic key ***K*** (or optionally ***K***∥***1***, i.e. a concatenation of the cryptographic key ***K*** and a flag ***1*).** The cryptographic key ***K*** (or optionally ***K***∥***1***) is padded in padding functional block **614** to make it a multiple of ***r*** (if it is not a multiple of ***r).*** The padding can involve appending bits to the beginning or end of the cryptographic key ***K*** (or optionally ***K***∥***1***). Next, the output of padding functional block **614** is then combined at **626** with the first ***r*** bits of the initialized state bits ***b.*** In some scenarios, the bits ***b*** are initialized to zero, where ***b = r +* c.** The present solution is not limited in this regard. The bits ***b*** (e.g., 512 bits) may alternatively be initialized to any bit value (e.g., a 512 bit value). As such, each user could generate their own unique value to set during the initialization phase.

The combining of the padding functional block output and the first *r* bits of the initialized state can be achieved via XOR operations **626,** as shown in FIG. 6. XOR operations are well known in the art, and therefore will not be described in detail here. Still, it should be understood that the XOR operations are performed on a bit-by-bit basis. The results of the XOR operations are then passed to permutation functional block **608.** In permutation functional block **608,** the unique permutation function ***f*** is performed using the results of the XOR operations as inputs so as to generate a keystream block **Z₀**. The keystream block **Z₀** is then truncated to a desired length ***l,*** as shown by truncate functional block **620.** The value of ***l*** here can be less than ***r.***

The input to duplex object **604** is authentication data ***A*** (or optionally ***A***∥***0**,* i.e. a concatenation of authentication data ***A*** and a flag **0).** The authentication data ***A*** can include but is not limited to, authenticated packet headers. The authentication data ***A*** (or optionally ***A***∥***0***) is padded in padding functional block **616** to make it a multiple of ***r*** (if it is not a multiple of ***r).*** The padding of padding functional block **616** is the same as or similar to that of padding functional block **614.** Next, the output of padding functional block **616** is then combined with keystream block **Z₀**. This combining can be achieved via XOR operations **628,** as shown in FIG. 6. XOR operations are well known in the art, and therefore will not be described in detail here. Still, it should be understood that the XOR operations are performed on a bit-by-bit basis. The results of the XOR operations are then passed to permutation functional block **610.** In permutation functional block **610,** the unique permutation function ***f*** is performed so as to generate a keystream block **Z₁**. The keystream block **Z₁** is then optionally truncated to a desired length ***l**,* as shown by truncate functional block **622.** The value of ***l*** here can be less than ***r***. Truncation may be performed when the number of bits contained in the message body ***B*** is less than **r.** In this case, the value of ***l*** equals the number of bits contained in the message body ***B.*** The truncated keystream block **Z_{1-Trunc}** is output from duplex object **604.**

Thereafter, the truncated keystream block **Z_{1-Trunc}** is combined with a message body ***B*** (or optionally ***B***∥***1***, i.e. a concatenation of message body ***B*** and a flag **1).** The message body ***B*** can include, but is not limited to, packet payload. This combining is achieved via XOR operations **632,** which produces encrypted data (e.g., ciphertext) C. The XOR operations **632** are performed on a bit-by-bit basis.

The input to duplex object **606** is message body data ***B*** (or optionally ***B***∥***1***). The message body data ***B*** can include but is not limited to, packet payload data. The message body data ***B*** (or optionally ***B***∥***1***) is padded in padding functional block **618** to make it a multiple of ***r*** (if it is not a multiple of *r).* The padding of padding functional block **618** is the same as or similar to that of padding functional blocks **614** and **616.** Next, the output of padding functional block **618** is then combined with keystream block **Z₁**. This combining can be achieved via XOR operations **630,** as shown in FIG. 6. XOR operations are well known in the art, and therefore will not be described in detail here. Still, it should be understood that the XOR operations are performed on a bit-by-bit basis. The results of the XOR operations are then passed to permutation functional block **612.** In permutation functional block **612,** the unique permutation function ***f*** is performed so as to generate a keystream block **Z₂**. The keystream block **Z₂** is then optionally truncated to a desired length ***l*,** as shown by truncate functional block **624.** The value of ***l*** here can be less than ***r*.** The truncated keystream block **Z_{2-Trunc}** is output from duplex object 604. The truncated keystream block **Z_{2-Trunc}** is then used as an authentication tag **T.**

In a communications scenario, the encrypted data (e.g., ciphertext) **C** and the authentication tag **T** would be transmitted from a source communication device to a destination communication device. The cryptographic key ***K*** would not be transmitted since it would be known by both devices.

The advantages of the duplex construction **600** are that: a single cryptographic key is required; encryption and authentication requires only a single pass; intermediate tags are supported thereby; additional authentication data (e.g., packet headers) is supported thereby; it is secure against generic attacks; and the ability to trade off speed and security by adjusting the value of***r**.*

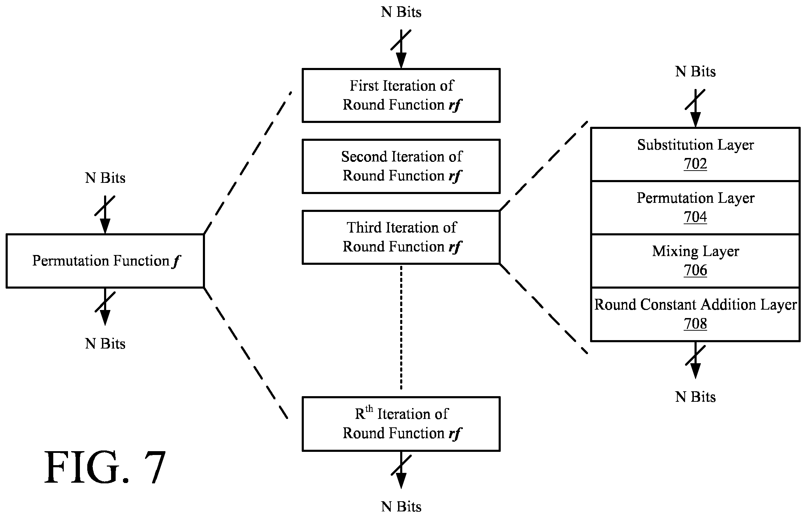

Referring now to FIG. 7, there is provided a schematic illustration that is useful for understanding the unique permutation function ***f*** of the present solution which is employed in the sponge and duplex constructions described above in relation to FIGS. 5-6. The permutation function ***f*** supports any key size (e.g., 128 bits or 256 bits) and is bijective. Since the permutation function ***f*** is bijective, ***f*^{*-*1}** (inverse of ***f***) exists by definition. While ***f*^{*-*1}** is not used in practice, it may be helpful for cryptanalysis and verification purposes. Notably, the number of bits that are input and/or output from the permutation function ***f*** is also customizable.

The permutation function ***f*** comprises a round function ***f_{round}*** that is iterated **R** times, depending on the key size. The round function ***f_{round}*** consists of the following layers: a substitution layer **702;** a permutation layer **704;** a mixing layer **706;** and a round constant addition layer **708.** In the substitution layer **702,** the bits input thereto are substituted with first substitute bits in accordance with a particular transformation and/or mapping algorithm. For example, input bits 010001 are substituted with bits 1010. The number of bits input/output to/from the substitution layer **702** can be the same or different. In the permutation layer **704,** the bits input thereto are re-arranged. In the mixing layer **706,** at least two outputs of the permutation layer are combined together. In the round constant addition layer **708,** a constant is added to the output of the mixing layer. The manners in which the operations of each layer **702-708** are achieved will be discussed in detail below.

Notably, **R** is an integer which has a value large enough to resist differential attacks, linear attacks and other attacks depending on the cryptographic key size (e.g., R=10 for a 128 bit key or R=16 for a 256 bit key). In this regard, **R** is a customizable element of the permutation function ***f***. In some scenarios, **R** is determined by (1) calculating the number of rounds needed for linear and differential cryptanalysis and (2) adding some buffer to increase the security margin.

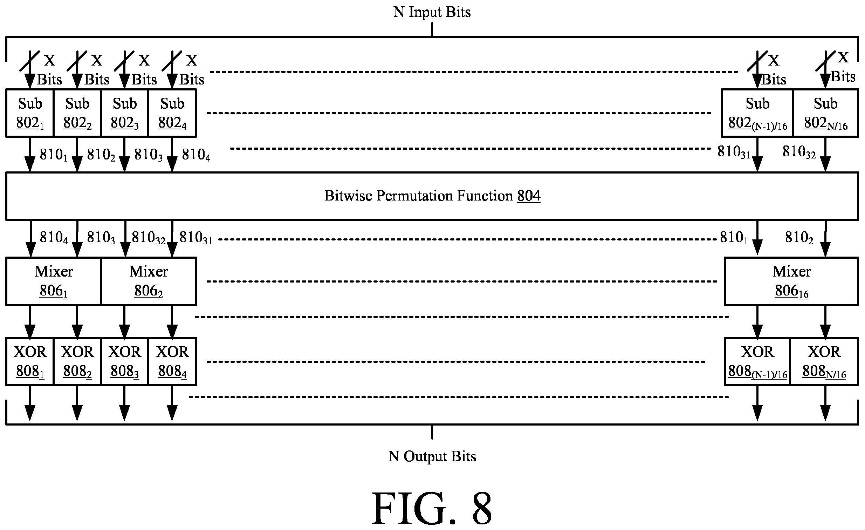

Referring now to FIG. 8, there is provided an expanded block diagram of the round function ***f_{round}***. The substitution layer **702** comprises a plurality of identical substitution boxes (or S-boxes) **802₁, 802₂, 802₃, 802₄,** ..., **802_{(N-1)/16}**, **802_{N/16}** which collectively receive **N** input bits (e.g., 512 input bits) and individually receive **X** bits of the **N** input bits (e.g., 16 bits of 512 input bits). The value of **N** is selected to be large enough to keep a cryptographic key secure. For example, the value of **N** is selected to be 512 bits for a cryptographic key having a size of 128 bits or 256 bits.

The purpose of the S-boxes is to perform substitution so as to obscure the relationship between the cryptographic key and encrypted data (e.g., ciphertext). The S-boxes **802₁, 802₂, 802₃, 802₄, ..., 802_{(N-1)/16}, 802_{N/16}** can each include, but are not limited to, S-box **100** of FIG. 1. The S-boxes can be implemented as look-up tables. The look-up tables can be fixed or dynamically generated using the cryptographic key.

The permutation layer **704** comprises a bitwise permutation function **804.** The purpose of the bitwise permutation function **804** is to permute or change a bit position of each bit **810₁, 810₂, 810₃, 810₄, ..., 810₃₁, 810₃₂** input thereto relative to all other bits input thereto. Bitwise permutation functions are well known in the art, and therefore will not be described in detail herein. Any known or to be known bitwise permutation function can be used herein without limitation provided that the following properties are satisfied thereby.
(1) Each bit **810₁, 810₂, 810₃, 810₄,** ..., **810₃₁, 810₃₂** permutes to an output bit position different from its input bit position.
(2) All outputs of a given S-box go to X different mixers.
(3) The permutation period of the permutation function ***f*** exceeds the number of rounds **R.**
For example, the bitwise permutation function includes a linear permutation function, an affine permutation function, or a random permutation function.

The mixing layer **706** comprises a mixing function that is implemented via a plurality of mixers **806₁, 806₂,** ..., **810₁₆.** In the scenario shown in FIG. 8, one mixer is provided for every two S-boxes. The present solution is not limited in this regard. The particular number of S-boxes per mixer is customizable. Also, the mixing function is a customizable element of the present solution. The purpose of the mixing function is to provide local diffusion (i.e., across two words) and increase the linear and differential branch numbers of a round from two to three. In this regard, mixers based on matrix multiplication in Galois Field GF(2^{M}) may be employed because they satisfy all of the following constraints: the matrix is invertible in GF(2⁴)/<*p*(*x*)>; the matrix has a differential and linear branch number equal to three; and the transformation is efficiently implementable in hardware.

The round constant addition layer **708** comprises a plurality of addition operations represented by blocks **808₁, 808₂, 808₃, 808₄,..., 808_{(N-1)/16}, 808_{N/16}.** The purpose of the addition operations is to add a constant N bit value to the state using bitwise XOR in order to disrupt symmetry and prevent slide attacks. Notably, the round constant must be fixed random N-bit values. Each round ***i*** must use a different round constant. The round constant is customizable, and should be unique for each round to prevent against slide attacks and be random, pseudorandom or highly asymmetric to reduce symmetry in the state. A round constant can be chosen at random in accordance with a chaotic, random or pseudo-random number algorithm. Chaotic, random and pseudo-random number algorithms are well known in the art, and therefore will not be described herein. Any known or to be known chaotic, random or pseudo-random number algorithm can be used herein without limitation.

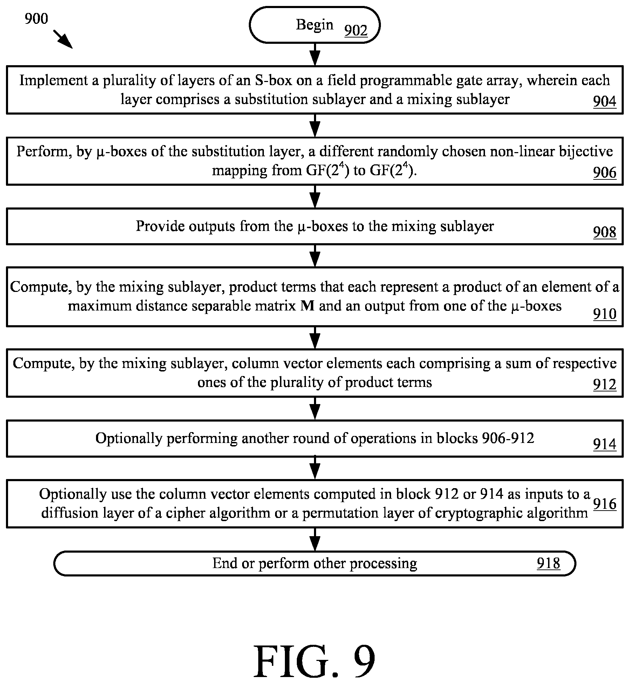

Referring now to FIG. 9, there is provided a flow diagram of an illustrative method 900 for generating encrypted data (e.g., ciphertext) that is useful for understanding the present solution. Method **900** begins with block **902** and continues with block **904** where a plurality of layers (e.g., layers **L0, L1, L2, L3** of FIG. 1) of an S-box (e.g., S-box **100** of FIG. 1) is implemented on a field programmable gate array (e.g., FPGA **404** of FIG. 4). The S-box is configured to meet the following requirements: no fixed points where **S(x)** = **x;** and no opposite fixed points where S(x) = bitwise complement of **x.** The plurality of layers may comprise four layers. Each of the layers comprises a substitution sublayer (e.g., substitution sublayer **SL0**, **SL1, SL2** or **SL3** of FIG. 1) and a mixing sublayer (e.g., mixing sublayer **m₀, m₁, m₂** or **m₃** of FIG. 1).

The substitution sublayer comprises a plurality of µ-boxes (e.g., µ-boxes **µ₀₀, µ₀₁, µ₀₂, µ₀₃, µ₁₀, µ₁₁, µ₁₂, µ₁₃, µ₂₀, µ₂₁**, **µ₂₂, µ₂₃, µ₃₀, µ₃₁, µ₃₂**, **and/or µ₃₄** of FIG. 1 and/or **200** of FIG. 2). Each of said µ-boxes is configured to meet the following requirements: no fixed points where **µ**(**x**) = **x;** no opposite fixed points where **µ**(**x**) = bitwise complement of **x;** maximum differential probability of 4/16 or smaller; and maximum absolute linear bias of 4/16 or smaller. In some scenarios, the µ-boxes may comprise four µ-boxes with a 4-bit input and a 1-bit output. Each µ-box may be implemented via at least four look-up tables of the field programmable gate array.

In block **906,** each µ-box performs a different randomly chosen non-linear bijective mapping from GF(2⁴) to GF(2⁴). The outputs of the µ-boxes are provided to the mixing sublayer as shown by block **908.**

In **910,** the mixing sublayer computes a plurality of product terms each representing a product of an element of a maximum distance separable matrix **M** and an output from one of the plurality of µ-boxes. The product terms may be computed by product operators that are each implemented via at least two lookup tables of the field programmable gate array. Each of the product operators may be implemented via four lookup tables of the field programmable gate array. The mixing sublayer also computes a plurality of column vector elements each comprising a sum of respective ones of the plurality of product terms, as shown by block **912.**

Another round of the operations in blocks **906/908** and/or **910/912** may optionally be performed as shown by block **914.** In some scenarios, each element of the maximum distance separable matrix **M,** the output of each of the µ-boxes, and each of the column vector elements comprises an element in a finite field GF(2⁴)/***f***(***x***), wherein ***f***(***x***) is a degree-4 irreducible polynomial. Each round may use a different randomly chosen maximum distance separable matrix and a different randomly chosen irreducible polynomial.

In optional block **916,** the column vector elements may be used as inputs to a diffusion layer (e.g., diffusion layer **410 or 414** of FIG. 4) of a cipher algorithm or a permutation layer (e.g., permutation layer **704** of FIG. 7) of a cryptographic algorithm. Subsequently, method **900** continues to block **918** where it ends or other operations are performed. The other operations can include, but are not limited to, returning to **902.**

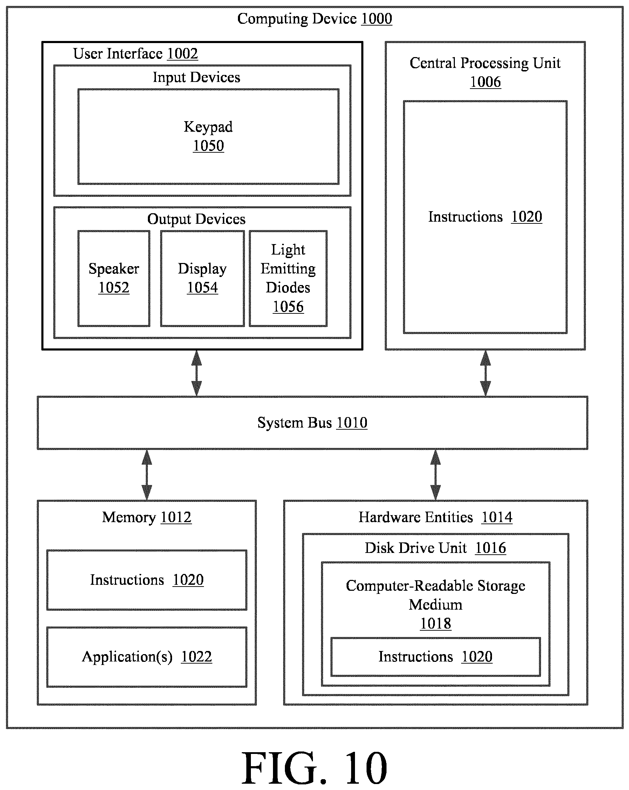

Referring now to FIG. 10, there is provided a detailed block diagram of an illustrative architecture for a computing device **1000.** The computing device **1000** is generally configured to allow a cryptographic algorithm to be built and/or customized. In this regard, the computing device **1000** implements a crypt development kit (e.g., crypto development kit **400** of FIG. 4).

The computing device **1000** may include more or less components than those shown in FIG. 10. However, the components shown are sufficient to disclose an illustrative embodiment implementing the present solution. The hardware architecture of FIG. 10 represents one embodiment of a representative server configured to facilitate building a cryptographic algorithm and/or customizing a permutation function***f***.

Some or all the components of the computing device **1000** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. 10, the computing device **1000** comprises a user interface **1002, a** CPU **1006,** a system bus **1010,** a memory **1012** connected to and accessible by other portions of computing device **1000** through system bus **1010,** and hardware entities **1014** connected to system bus **1010.** The user interface can include input devices (e.g., a keypad **1050**) and output devices (e.g., speaker **1052,** a display **1054,** and/or light emitting diodes **1056**), which facilitate user-software interactions for controlling operations of the computing device **1000.**

At least some of the hardware entities **1014** perform actions involving access to and use of memory **1012,** which can be a RAM, a disk driver and/or a Compact Disc Read Only Memory ("CD-ROM"). Hardware entities **1014** can include a disk drive unit **1016** comprising a computer-readable storage medium **1018** on which is stored one or more sets of instructions **1020** (e.g., software code) configured to implement one or more of the methodologies, procedures, or functions described herein. The instructions **1020** can also reside, completely or at least partially, within the memory **1012** and/or within the CPU **1006** during execution thereof by the computing device **1000.** The memory **1012** and the CPU **1006** also can constitute machine-readable media. The term "machine-readable media", as used here, refers to a single medium or multiple media (e.g., a centralized or distributed database, and/or associated caches and servers) that store the one or more sets of instructions **1020.** The term "machine-readable media", as used here, also refers to any medium that is capable of storing, encoding or carrying a set of instructions **1020** for execution by the computing device **1000** and that cause the computing device **1000** to perform any one or more of the methodologies of the present disclosure.

In some scenarios, the hardware entities **1014** include an electronic circuit (e.g., a processor) programmed for facilitating the building of a cryptographic design for an FPGA implementation and/or customization of a cryptographic algorithm. In this regard, it should be understood that the electronic circuit can access and run a software application **1022** installed on the computing device **1000.**

The described features, advantages and characteristics disclosed herein may be combined in any suitable manner. One skilled in the relevant art will recognize, in light of the description herein, that the disclosed systems and/or methods can be practiced without one or more of the specific features. In other instances, additional features and advantages may be recognized in certain scenarios that may not be present in all instances.

Although the systems and methods have been illustrated and described with respect to one or more implementations, equivalent alterations and modifications will occur to others skilled in the art upon the reading and understanding of this specification and the annexed drawings. In addition, while a particular feature may have been disclosed with respect to only one of several implementations, such feature may be combined with one or more other features of the other implementations as may be desired and advantageous for any given or particular application. Thus, the breadth and scope of the disclosure herein should not be limited by any of the above descriptions. Rather, the scope of the invention should be defined in accordance with the following claims and their equivalents.

## Claims

1. A method for providing an S-box, comprising:
implementing a plurality of layers on a field programmable gate array, each of the layers comprises a substitution sublayer and a mixing sublayer; and
wherein the substitution sublayer comprises a plurality of µ-boxes that are each implemented via multiple look-up tables of the field programmable gate array and configured to perform a different randomly chosen non-linear bijective mapping from GF(2⁴) to GF(2⁴); and
wherein the mixing sublayer is configured to (i) compute a plurality of product terms each representing a product of an element of a maximum distance separable matrix **M** and an output from one of the plurality of µ-boxes, and (ii) compute a plurality of column vector elements each comprising a sum of respective ones of the plurality of product terms.

2. The method according to claim 1, wherein the S-box is configured to meet the following requirements: no fixed points where **S(x) = x;** and no opposite fixed points where S**(x)** = bitwise complement of **x.**

3. The method according to claim 1, wherein each of said µ-boxes is configured to meet the following requirements: no fixed points where **µ**(**x**) = **x;** no opposite fixed points where **µ**(**x**) = bitwise complement of **x;** maximum differential probability of 4/16 or smaller; and maximum absolute linear bias of 4/16 or smaller.

4. The method according to claim 1, wherein the plurality of µ-boxes comprises four or more µ-boxes with a 4-bit input and a 4-bit output.

5. The method according to claim 1, wherein the plurality of layers comprises four or more layers.

6. The method according to claim 1, wherein the plurality of product terms are computed by product operators that are each implemented via at least two lookup tables of the field programmable gate array.

7. The method according to claim 6, wherein each of the product operators is implemented via four or more lookup tables of the field programmable gate array.

8. The method according to claim 1, wherein each element of the maximum distance separable matrix **M,** the output of each of said µ-boxes, and each of said column vector elements comprises an element in a finite field GF(2⁴)/***f***(***x***), wherein ***f***(***x***) is a degree-4 irreducible polynomial.

9. An S-box, comprising:
a field programmable gate array implementing a plurality of layers that each comprises a substitution sublayer and a mixing sublayer;
the substitution sublayer comprising a plurality of µ-boxes that are each implemented via multiple look-up tables of the field programmable gate array and configured to perform a different randomly chosen non-linear bijective mapping from GF(2⁴) to GF(2⁴); and
the mixing sublayer configured to (i) compute a plurality of product terms each representing a product of an element of a maximum distance separable matrix **M** and an output from one of the plurality of µ-boxes, and (ii) compute a plurality of column vector elements each comprising a sum of respective ones of the plurality of product terms.

## Patentansprüche

1. Ein Verfahren zum Bereitstellen einer S-Box, umfassend:
Implementieren einer Vielzahl von Schichten auf einem feldprogrammierbaren Gate-Array, wobei jede der Schichten eine Substitutions-Unterschicht und eine Mischungs-Unterschicht umfasst; und
wobei die Substitutions-Unterschicht eine Vielzahl von µ-Boxen umfasst, die jeweils über mehrere Nachschlagetabellen des feldprogrammierbaren Gate-Arrays implementiert und so konfiguriert sind, dass sie eine unterschiedliche, zufällig gewählte, nichtlineare, bijektive Abbildung von GF(2⁴) auf GF(2⁴) ausführen; und
wobei die Mischungs-Unterschicht so konfiguriert ist, dass sie (i) eine Vielzahl von Produkttermen berechnet, von denen jeder ein Produkt aus einem Element einer Matrix **M** mit maximaler Distanztrennbarkeit und einer Ausgabe aus einer der Vielzahl von µ-Boxen darstellt, und (ii) eine Vielzahl von Spaltenvektorelementen berechnet, von denen jedes eine Summe aus jeweiligen Elementen der Vielzahl von Produkttermen umfasst.

2. Das Verfahren nach Anspruch 1, wobei die S-Box so konfiguriert ist, dass sie die folgenden Anforderungen erfüllt: keine Fixpunkte, bei denen **S**(**x**) = **x** gilt; und keine komplementären Fixpunkte, bei denen S(**x**) = bitweises Komplement von **x** gilt.

3. Das Verfahren nach Anspruch 1, wobei jede der µ-Boxen so konfiguriert ist, dass sie die folgenden Anforderungen erfüllt: keine Fixpunkte, bei denen **µ**(**x**) = **x**; keine komplementären Fixpunkte, bei denen **µ**(**x**) = bitweises Komplement von **x**; maximale Differentialwahrscheinlichkeit von 4/16 oder kleiner; und maximale absolute lineare Verzerrung von 4/16 oder kleiner.

4. Das Verfahren nach Anspruch 1, wobei die Vielzahl von µ-Boxen vier oder mehr µ-Boxen mit einem 4-Bit-Eingang und einem 4-Bit-Ausgang umfasst.

5. Das Verfahren nach Anspruch 1, wobei die Vielzahl von Schichten vier oder mehr Schichten umfasst.

6. Das Verfahren nach Anspruch 1, wobei die mehreren Produktterme durch Produktoperatoren berechnet werden, die jeweils über mindestens zwei Nachschlagetabellen des feldprogrammierbaren Gate-Arrays implementiert sind.

7. Das Verfahren nach Anspruch 6, wobei jeder der Produktoperatoren über vier oder mehr Nachschlagetabellen des feldprogrammierbaren Gate-Arrays implementiert ist.

8. Das Verfahren nach Anspruch 1, wobei jedes Element der maximal distanztrennbaren Matrix **M**, die Ausgabe jeder der µ-Boxen und jedes der Spaltenvektorelemente ein Element in einem endlichen Körper GF(2⁴)**/*f***(***x***) umfasst, wobei ***f***(***x***) ein irreduzibles Polynom 4. Grades ist.

9. Eine S-Box, umfassend:
ein feldprogrammierbares Gate-Array, das eine Vielzahl von Schichten implementiert, von denen jede eine Substitutions-Unterschicht und eine Mischungs-Unterschicht umfasst;
wobei die Substitutions-Unterschicht eine Vielzahl von µ-Boxen umfasst, die jeweils über mehrere Nachschlagetabellen des feldprogrammierbaren Gate-Arrays implementiert und so konfiguriert sind, dass sie eine unterschiedliche, zufällig gewählte, nichtlineare, bijektive Abbildung von GF(2⁴) auf GF(2⁴) ausführen; und
wobei die Mischungs-Unterschicht so konfiguriert ist, dass sie (i) eine Vielzahl von Produkttermen berechnet, von denen jeder ein Produkt aus einem Element einer Matrix **M** mit maximalem Abstand und einer Ausgabe aus einer der Vielzahl von µ-Boxen darstellt, und (ii) eine Vielzahl von Spaltenvektorelementen berechnet, von denen jedes eine Summe aus jeweiligen Elementen der Vielzahl von Produkttermen umfasst.

## Revendications

1. Une méthode permettant de fournir une table de conversion (S-box), comprenant:
la mise en œuvre d'une pluralité de couches sur un réseau de portes programmable, chacune des couches comprenant une sous-couche de substitution et une sous-couche de mélange; et
dans laquelle la sous-couche de substitution comprend une pluralité de µ-boîtes qui sont chacune mises en œuvre via plusieurs tables de consultation du réseau de portes programmables et configurées pour effectuer une application bijective non linéaire différente, choisie aléatoirement, de GF(2⁴) vers GF(2⁴); et
la sous-couche de mélange étant configurée pour (i) calculer une pluralité de termes de produit représentant chacun un produit d'un élément d'une matrice **M** séparable à distance maximale et d'une sortie de l'une de la pluralité de µ-boîtes, et (ii) calculer une pluralité d'éléments de vecteur de colonne comprenant chacun une somme de termes respectifs parmi la pluralité de termes de produit.

2. La méthode selon la revendication 1, dans laquelle la S-box est configurée pour satisfaire aux exigences suivantes : aucun point fixe tel que **S**(**x**) = **x** ; et aucun point fixe opposé tel que S(**x**) = complément binaire de **x**.

3. La méthode selon la revendication 1, dans laquelle chacune desdites µ-boîtes est configurée pour satisfaire aux exigences suivantes : aucun point fixe tel que **µ**(**x**) = **x** ; aucun point fixe opposé tel que **µ**(**x**) = le complément binaire de **x** ; une probabilité différentielle maximale de 4/16 ou inférieure ; et un biais linéaire absolu maximal de 4/16 ou inférieur.

4. La méthode selon la revendication 1, dans laquelle la pluralité de µ-boîtes comprend au moins quatre µ-boîtes ayant une entrée de 4 bits et une sortie de 4 bits.

5. La méthode selon la revendication 1, dans laquelle la pluralité de couches comprend quatre couches ou plus.

6. La méthode selon la revendication 1, dans laquelle la pluralité de termes de produit est calculée par des opérateurs de produit qui sont chacun mis en œuvre via au moins deux tables de consultation du réseau de portes programmable.

7. La méthode selon la revendication 6, dans laquelle chacun des opérateurs de produit est mis en œuvre via quatre tables de consultation ou plus du réseau de portes programmable.

8. La méthode selon la revendication 1, dans laquelle chaque élément de la matrice **M** séparable à distance maximale, la sortie de chacune desdites µ-boîtes, et chacun desdits éléments de vecteur colonne comprend un élément d'un corps fini GF(2⁴)**/f**(**x**), où ***f***(***x***) est un polynôme irréductible de degré 4.

9. Une S-box, comprenant:
un réseau de portes programmables sur site mettant en œuvre une pluralité de couches comprenant chacune une sous-couche de substitution et une sous-couche de mélange;
la sous-couche de substitution comprenant une pluralité de µ-boîtes qui sont chacune mises en œuvre via plusieurs tables de consultation du réseau de portes programmable et configurées pour effectuer une application bijective non linéaire différente, choisie aléatoirement, de GF(2⁴) vers GF(2⁴); et
la sous-couche de mélange étant configurée pour (i) calculer une pluralité de termes de produit représentant chacun un produit d'un élément d'une matrice **M** séparable à distance maximale et d'une sortie de l'une de la pluralité de µ-boîtes, et (ii) calculer une pluralité d'éléments de vecteur colonne comprenant chacun une somme de termes respectifs parmi la pluralité de termes de produit.
